# EUROPEAN PATENT SPECIFICATION

(11) **EP 4 590 727 B1**
(45) Date of publication and mention of the grant of the patent: **04.11.2026**
(21) Application number: 23769213.2
(22) Date of filing: 13.09.2023
(51) Int. Cl.: C08F 6/06, C08F 8/04, C08J 11/04

(54) **METHODS OF MAKING POLYVINYL CYCLOHEXANE VIA HYDROGENATION OF WASTE POLYSTYRENE SOURCES**
VERFAHREN ZUR HERSTELLUNG VON POLYVINYLCYCLOHEXAN DURCH HYDRIERUNG VON POLYSTYROLABFALLQUELLEN
PROCÉDÉS DE FABRICATION DE POLY(CYCLOHEXANE DE VINYLE) PAR HYDROGÉNATION DE SOURCES DE POLYSTYRÈNE USAGÉ

(30) Priority: 19.09.2022 EP 22196383
(43) Date of publication of application: 30.07.2025
(73) Proprietor: SABIC Global Technologies B.V., 4612 PX Bergen op Zoom (NL)
(72) Inventor: CONANT, Travis, Bengaluru 562125 (IN); GILBERT-WILSON, Ryan, Bengaluru 562125 (IN); SABNIS, Kaiwalya, Bengaluru 562125 (IN); TENNYSON, Reginald, Bengaluru 562125 (IN)
(74) Representative: Algemeen Octrooi- en Merkenbureau B.V.
(86) International application number: PCT/EP2023/075133
(87) International publication number: WO 2024/061704

(56) References cited:
- JP-A- 2009 013 235

## Description

This application claims benefit to European Patent Application No. 22196383, filed September 19, 2022.

### BACKGROUND OF THE INVENTION

### A. Field of the Invention

The invention generally concerns methods for the hydrogenation of waste aromatic-containing polymers. Waste aromatic-containing polymers can include polystyrene, expanded polystyrene, or a combination thereof.

### B. Description of Related Art

Plastic materials are used in a variety of materials (e.g., electronic products, furniture, food packaging, commercial products, vehicle products, airplane products, housing products, insulation, and the like) due to their light weight, tunable properties, and ability to be shaped/formed. However, durability makes plastics an increasing problem for the environment. To address this issue, methods for recycling of plastics have been researched. However, these methods suffer economic viability (e.g., poor market demand and low-end uses) and/or do not produce recycled polymers having the same properties (e.g., mechanical properties, physical properties, and the like) as a new/virgin polymer. To compensate for the inferior properties, recycled polymers have been typically blended with new polymers in a proportion that rarely can exceed 20%, even for the less stringent applications. To address polymer recycling issues, International Application Publication No. WO2016049782 to Cote and Vollmer et al*. (*Angewandte Chemie. Int. Ed. 2020, 59, 15402-15423) both describe dissolution/precipitating processes to separate one polymer from a mixture of waste polymers. Other methods of treating waste polymer solutions have been described. For example, Verma et al. (International Journal of Energy Research/Early View, https://doi.org/10.1002/er.8246) describes pyrolysis of waste expanded polystyrene and then hydrogenation of the pyrolyzed polystyrene to produce fuel oil. Japanese Patent Application Publication No. 2009013235A to Motoyama et al*.* describes a method for producing an alicyclic polymer. The method comprises hydrogenating the aromatic ring of an aromatic polymer in the presence of an organic solvent using a metal fine particle catalyst comprising at least one metal selected from the group consisting of ruthenium, rhodium, palladium, platinum, nickel, and cobalt.

Although solution-based processes for recycling waste polymers are known, challenges still remain to increase cost-effectiveness, retain virgin polymer properties, and/or make desirable end products.

### SUMMARY OF THE INVENTION

A discovery has been made that provides a solution to at least one or more of the problems associated with hydrogenation of waste aromatic-containing polymers. In one aspect, there is disclosed a process that can include contacting a waste aromatic-containing polymer solution with an adsorbent to produce a treated waste polymer solution. The treated waste aromatic-containing polymer solution can be hydrogenated under conditions sufficient to produce a polymer composition that can include hydrogenated or partially hydrogenation polymers (e.g., polystyrenic polymers to poly(vinylcyclohexane) (PVCH). In the context of the present invention, the waste aromatic-polymer can include polystyrene, expanded polystyrene, and/or densified expanded polystyrene, or any combination or blend thereof. An advantage of using the methods of the present invention is that additives detrimental to hydrogenation conditions (e.g., a co-stabilizer, an anionic surfactant, a nucleating agent, an initiator, a flame retardant, a colorant, or a mixture thereof) can be removed. Another advantage of the methods of the present invention is the densification and hydrogenation of the waste aromatic-containing polymer can be performed in the same reactor. By treating the waste aromatic-containing polymer solution prior to hydrogenation, greater than 50% conversion of the waste aromatic-containing polymer can be observed. These advantages can result in an economic advantage for the production of hydrogenated or partially hydrogenation polymers (e.g., polystyrenic polymers to poly(vinylcyclohexane) (PVCH). Still further, and with respect to PVCH, the resulting PVCH can be a fully aliphatic, amorphous polymer with high thermal resistance (T_{g} =145 °C), high thermo-oxidative resistance, high resistance against polar chemicals, and/or high resistance against UV and gamma radiation.

Methods of hydrogenation of waste aromatic-containing polymers are described. A method can include contacting a waste aromatic-containing polymer solution that includes a waste aromatic-containing polymer and a solvent with an adsorbent material to produce a treated waste aromatic-containing polymer solution. The waste aromatic-containing polymer in the solution can be partially or fully solubilized within the solution. In some preferred aspects, the polymer is fully solubilized within the solution. The adsorbent can be activated carbon, silica gel, a molecular sieve, or a combination thereof. The adsorbent can be dispersed in, partially solubilized in, or fully solubilized within the solution. In preferred embodiments, the adsorbent is dispersed in the solution. In one preferred aspect, the adsorbent can be activated carbon. Contacting conditions can include a temperature of 20 °C to 30 °C, atmospheric pressure, or a combination thereof, for 8 to 30 hours, preferably, 10 hours. The adsorbent can be removed by filtration. The treated aromatic-containing polymer solution can be contacted with a hydrogenation catalyst in the presence of hydrogen (H₂) gas under conditions sufficient to produce a polymer composition that can include at least one hydrogenated and/or at least one partially hydrogenated aromatic ring *(e.g.,* PVCH).

**In** some aspects, a method of hydrogenation of waste aromatic-containing polymers can include (a) contacting a waste aromatic-containing polymer solution that includes a waste aromatic-containing polymer, one or more additives, and a solvent with an adsorbent material to produce a treated waste aromatic-containing polymer solution, (b) removing the adsorbent from the produced treated waste aromatic-containing polymer solution, and (c) contacting the treated waste aromatic-containing polymer solution with a hydrogenation catalyst in the presence of hydrogen (H₂) gas under conditions sufficient to produce a polymer composition that can include at least one hydrogenated and/or at least one partially hydrogenated aromatic ring *(e.g.,* PVCH). Contacting the waste aromatic-containing polymer solution with the adsorbent removes at least one of the additives from the waste aromatic-containing polymer solution. Non-limiting examples of additives include a co-stabilizer, an anionic surfactant, nucleating agent, initiator, a flame retardant, a colorant, or a mixture thereof. The aromatic-containing polymer solution can include an aromatic-containing polymer, a polar solvent, and a nonpolar solvent. In a preferred aspect, the aromatic-containing polymer can be waste polystyrene, expanded polystyrene, densified expanded polystyrene, or a blend or mixture thereof, and the hydrogenated or partially hydrogenated polymer can include poly(vinylcyclohexane). The waste aromatic-containing polymer in the solution can be partially or fully solubilized within the solution. In some preferred aspects, the polymer is fully solubilized within the solution. The adsorbent can be activated carbon, silica gel, a molecular sieve, or a combination thereof. The adsorbent can be dispersed in, partially solubilized in, or fully solubilized within the solution. In preferred embodiments, the adsorbent is dispersed in the solution. In one preferred aspect, the adsorbent can be activated carbon. Contacting conditions for step (a) can include a temperature of 20 °C to 30 °C, atmospheric pressure, or a combination thereof, for 8 to 30 hours, preferably, 10 hours.

In the methods of the present invention, the aromatic-containing polymer can be waste polystyrene, expanded polystyrene, densified expanded polystyrene, or a blend or mixture thereof, and the hydrogenated or partially hydrogenated polymer can include poly(vinylcyclohexane). Non-limiting examples, of the nonpolar solvent can include a C5 to C12 linear alkane, a C5 to C12 branched alkane, or a C5 to C12 cyclic alkane, or a mixture thereof (e.g., cyclopentane, cyclohexane, methylcyclohexane, ethylcyclohexane, cyclooctane, cycloheptane, dodecane, isopentane, decahydronaphthalene, or a mixture thereof). Non-limiting examples of the polar solvent can include dichloromethane, 1,2-dichloroethane, tetrahydrofuran, methyl tetrahydrofuran, or a mixture thereof. In a preferred aspect, the non-polar solvent can be cyclohexane and the polar solvent can be dichloromethane. A volume ratio of nonpolar solvent to polar solvent can range from 0.1:99.9 to 99.9:0.1, preferably 1:1. In some aspects, it has also been discovered that including too much of polar solvent (e.g., above 30% by volume) leads to diminishing returns. For example, using higher than 30% by vol. may not lead to a further significant increase in the hydrogenation rate. In some aspects, a hydrogenation rate of reaction is increased by a factor of at least 1, preferably 2, more preferably 2.5, or even more preferably 5, as compared to a hydrogenation rate of reaction using under the same reaction conditions without the polar solvent and/or treatment with adsorbent.

Contacting conditions for hydrogenation of the treated aromatic-containing polymer solution can include a temperature of 100 °C to 220 °C, a pressure of 3.4 MPa to 7 MPa, or a combination thereof. Under these conditions, the waste aromatic-containing polymer can be fully solubilized or at least partially solubilized in the solvent. Hydrogenation of the waste aromatic-containing polymer results in a hydrogenated or partially hydrogenated polymer composition that can be free or substantially free of polymer scission compositions. The waste aromatic-containing polymer concentration in the polymer solution during the adsorbing process and/or hydrogenation process can be the same or different. In some aspects, the waste aromatic-containing polymer concentration in the polymer solution can range from 5 wt.% to 20 wt.%, preferably 8 wt.%. In some aspects, the hydrogenation catalyst can include platinum (Pt), palladium (Pd), ruthenium (Ru), or any combination thereof, or alloy thereof. The hydrogenation catalyst can include a support (e.g., silica (SiO₂), alumina (Al₂O₃), or titania (TiO₂), or any combination thereof). The hydrogenation process can be a heterogeneous catalytic hydrogenation process as the catalyst can be dispersed or suspended in the solvent.

Any embodiment discussed with respect to one aspect of the invention applies to other aspects of the invention as well and vice versa.

The following includes definitions of various terms and phrases used throughout this specification.

The term "waste aromatic-containing polymer" refers to a used polymer, a used copolymer, or used block polymer and the like having at least one aromatic ring. Used can refer to a polymer that has been previous used in, for example, an article of manufacture or a previous process. The methods of the present invention can efficiently and effectively recycle used polymers. Non-limiting examples of waste polymers are used polystyrene, used polymethylstyrene, and used copolymers of styrene and at least one other monomer such as α-methylstyrene, butadiene, isoprene, acrylonitrile, methyl acrylate, methyl methacrylate, maleic anhydride, and/or olefins (e.g., ethylene or propylene). Examples of suitable copolymers include those formed from acrylonitrile, butadiene and styrene, copolymers of acrylic esters, styrene and acrylonitrile, copolymers of styrene and α-methylstyrene, and copolymers of propylene, diene and styrene, aromatic polyethers, particularly polyphenylene oxide, aromatic polycarbonates, aromatic polyesters, aromatic polyamides, polyphenylenes, polyxylylenes, polyphenylene vinylenes, polyphenylene ethinylenes, polyphenylene sulfides, polyaryl ether ketones, aromatic polysulfones, aromatic polyether sulphones, aromatic polyimides and mixtures thereof, and optionally copolymers with aliphatic compounds also. Suitable substituents in the phenyl ring include C1-C4 alkyl groups, such as methyl or ethyl, C1-C4 alkoxy groups such as methoxy or ethoxy, and/or aromatic entities which are condensed thereon and which are bonded to the phenyl ring via a carbon atom or via two carbon atoms, including phenyl, biphenyl and naphthyl. Suitable substituents on the vinyl group include C1-C4 alkyl groups such as methyl, ethyl, or n- or isopropyl, particularly methyl in the α-position. Suitable olefinic comonomers include ethylene, propylene, isoprene, isobutylene, butadiene, cyclohexadiene, cyclohexene, cyclopentadiene, norbornenes which are optionally substituted, dicyclopentadienes which are optionally substituted, tetracyclododecenes which are optionally substituted, dihydrocyclopentadienes, derivatives of maleic acid, preferably maleic anhydride, and derivatives of acrylonitrile, preferably acrylonitrile and methacrylonitrile.

The waste aromatic-containing polymers can have (weight average) molecular weights Mw from 1000 to 10,000,000, preferably from 60,000 to 1,000,000, most preferably from 70,000 to 600,000, particularly from 100,000 to 300,000, as determined by gel permeation chromatography (GPC) equipped with light scattering, refractive index, and UV detectors.

The waste aromatic-containing polymers can have a linear chain structure or can have branching locations due to co-units (e.g., graft copolymers). The branching centers can include star-shaped or branched polymers, or can include other geometric forms of the primary, secondary, tertiary, or optionally of the quaternary polymer structure. Copolymers can be random copolymers or alternatively block copolymers. Block copolymers include di-blocks, tri-blocks, multi-blocks, and star-shaped block copolymers.

The term "alkane" refers to saturated hydrocarbons. Alkanes can be linear, branched, or cyclic.

The phrase "hydrogenation activity" refers to a measured rate of polymer hydrogenation in the unit of moles of aromatic rings per hour per gram of catalytic metal at a specific reaction temperature, pressure, and/or polymer concentration.

The term "nanoparticles" means particles that exist on the nanometer (nm) scale with the diameter between 1 nm and 1000 nm.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%", "vol.%", or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The methods of the present invention can "comprise," "consist essentially of," or "consist of" particular ingredients, components, compositions, *etc.* disclosed throughout the specification.

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting.

### BRIEF DESCRIPTION OF THE DRAWINGS

Advantages of the present invention may become apparent to those skilled in the art with the benefit of the following detailed description and upon reference to the accompanying drawings.

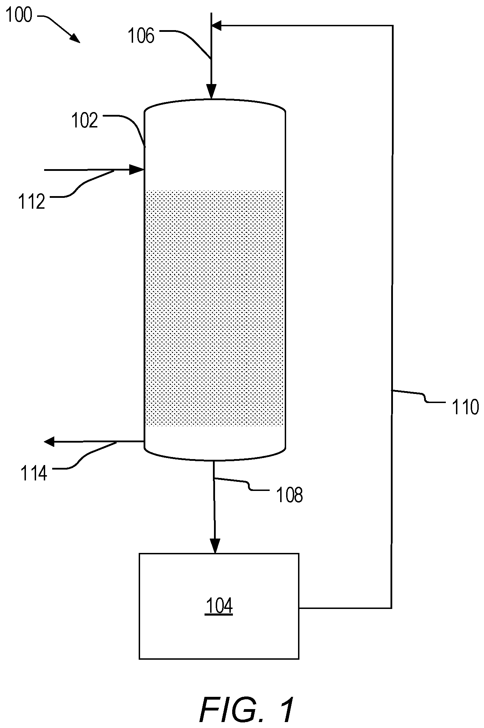

**FIG.** 1 is an illustration of a system used to produce a hydrogenated or partially hydrogenated aromatic-containing polymers from a waste aromatic-containing polymer. The system includes a filtration system downstream of a reactor. The reactor can be used to produce 1) a treated reactant feed that includes a waste aromatic-containing polymer and 2) the hydrogenated or partially hydrogenated aromatic-containing polymer.

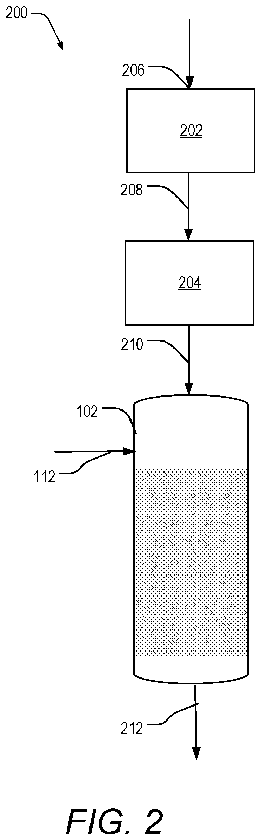

**FIG.** 2 is an illustration of a system used to produce hydrogenated or partially hydrogenated aromatic-containing polymer from a waste aromatic-containing polymer. The system includes a dissolution unit and an adsorption unit upstream of a hydrogenation reactor.

While the invention is susceptible to various modifications and alternative forms, specific embodiments thereof are shown by way of example in the drawings. The drawings may not be to scale.

### DETAILED DESCRIPTION OF THE INVENTION

At least one solution to some of the problems associated with hydrogenating waste aromatic-containing polymers has been discovered. The solution can include (1) a cost-effective treatment to remove impurities detrimental to hydrogenation, and (2) a solvent system that can increase production of hydrogenated aromatic-containing polymers. The impurities can be removed through adsorption. The solvent system can include a polar solvent and a non-polar solvent. Without wishing to be bound by theory, it is believed that the addition of a polar solvent increases mass transfer between the catalyst and the polymer. The polymer can be fully or partially solubilized within the solvent containing solution.

These and other non-limiting aspects of the present invention are discussed in further detail in the following sections with reference to the FIGS. 1 and 2.

### A. Systems for Treating and Hydrogenating Waste Aromatic-Containing Polymers

FIG. 1 depicts a schematic for a process for the treatment and hydrogenation of a waste aromatic-containing polymer using a method of the present invention. System 100 can include reactor 102 and filtration unit 104. Reactor 102 can be configured to be in fluid communication with filtration unit 104.

Reactor 102 can be any reactor suitable for contacting a polymer with an adsorbent, and/or performing polymer hydrogenations (e.g., a batch reactor or continuous reactor). Reactor 102 can include an adsorbent as described throughout the specification. Waste aromatic-containing polymer reactant feed 106 can enter reactor 102 and contact the adsorbent. The reactant feed can be a mixture of a solvent described in Section D and a waste aromatic-containing polymer (*See,* Section B). In one aspect, the solvent is a mixture of dichloromethane and cyclohexane, the waste aromatic-containing polymer is a waste polystyrenic resin, waste expanded polystyrene, waste densified expanded polystyrene, or a combination or blend thereof, and the adsorbent is activated charcoal. In some embodiments, a dissolution unit (*See,* for example, dissolution unit in FIG. 2) is in fluid communication with reactor 102. Dissolution unit can be used to dissolve and/or densify the waste aromatic-containing polymer and produce reactant feed 106. A mass ratio of solvent to polymer can be 4:1, 9:1, 19:1 or any range or value there between. The solvent can fully solubilize, or at least partially solubilize the waste aromatic-containing polymer, the hydrogenated waste aromatic-containing polymer, the partially waste hydrogenated aromatic-containing polymer, or combinations thereof. In some aspects, the adsorbent is not solubilized by the solvent. The adsorbent can be dispersed in the reactant feed using agitation. Agitation of the reactant feed/adsorbent dispersion can be performed at a temperature of 20 °C to 30 °C (*e.g.,* 20 °C, 25 °C, 30 °C or any value or range there between) at atmospheric pressure. Contact time (agitation) can be from 8 to 30 hours (*e.g.,* 8, 9, 10, 11, 12, 13, 14, 15, 16, 17, 18, 19, 20, 21, 22, 23, 24, 25, 26, 27, 28, 29, or 30, or any range or value there between).

Reactant feed/adsorbent dispersion 108 can exit reactor 102 and enter filtration unit 104. In filtration unit 104, the adsorbent can be removed from the reactant feed to produce a treated reactant feed. Filtration can include centrifugation, gravity filtration, vacuum filtration, and the like. In some aspects, a filtration aid can be used. Non-limiting examples of filtration aids include diatomaceous earth, perlite, cellulose, paper, rice hull ash, or cellulose, or any combination thereof. In one preferred aspect, diatomaceous earth (celite) is used as a filtration aid.

Treated reactant feed 110 can exit filtration unit 104 and enter reactor 102. In some embodiments, the treated reactant feed can enter a different reactor positioned downstream of filtration unit 104. Reactor 102 can include a hydrogenation catalyst. The hydrogenation catalyst can be dispersed in the reactant feed. After purging reactor 102 with nitrogen, H₂ reactant feed 112 can enter the reactor. The pressure of reactor 102 can be maintained with the H₂ reactant feed. The waste aromatic-containing polymer concentration can be the same or similar to the waste aromatic-containing polymer concentration during adsorbent treatment. The temperature and pressure can be varied depending on the reaction to be performed. Temperatures can range from 100 °C to about 220 °C, 120 °C to 190 °C, 150 °C to 180 °C, 190 °C, 200 °C, 210 °C, or 220 °C, or any value or range there between. H₂ pressures can range from about 3.45 MPa to 7 MPa or 3.45, 3.5, 3.6, 3.7, 3.8, 3.9, 4.0, 4.1, 4.2, 4.3, 4.5, 5.0, 5.5, 6.0, 6.5, 6.9, 7.0 or any range or value there between. Hydrogenation of the treated reactant feed can produce a polymer product that includes hydrogenated or partially hydrogenated waste aromatic-containing polymers. The hydrogenation activity can be at least 10 moles of aromatic rings per hour per gram of catalytic metal (*e.g.,* Pt, Pd, and/or Ru) at the reaction temperature of 120 °C to 140 °C, pressure of 7 MPa. Hydrogenation levels can be at least 50%, 55%, 60%, 65%, 70%, 75%, 80%, 85%, 90%, 95%, or 100%, or any range or value there between. Polymer product 114 can exit reactor 102 and be sent to other processing units, stored, and/or be transported. The polymer product can include at least one hydrogenated, at least one partially hydrogenated aromatic ring, or both, or mixtures thereof. For example, waste polystyrene can be hydrogenated to produce poly(vinylcyclohexane). The produced polymer product is absent lower molecular weight polymers due to polymer scission.

Referring to FIG. 2, system 200 can include dissolution unit 202, adsorbent unit 204, and reactor 102. Waste aromatic-containing polymer and solvent can be added to dissolution unit 202 via inlet 206. In dissolution unit 202, the waste aromatic-containing polymer can be dissolved and/or densified to produce waste aromatic containing polymer reactant feed 208. Dissolution temperature can be any temperature suitable to facilitate dissolving the waste aromatic-containing polymer in the solvent (e.g., 20 °C to 60 °C, preferably 30 °C to 45 °C). Waste aromatic-containing polymer reactant feed 208 can exit dissolution unit 202 and enter adsorption unit 204. Adsorption unit 204 can be any known adsorbent unit (*e.g.,* packed column, pressure swing units and the like). Adsorption unit 204 can include one or more adsorbent beds filled with one or more types of adsorbent. In adsorption unit 204, the solution can contact the adsorbent to produce a treated waste aromatic-containing polymer reactant feed. Treated waste aromatic-containing polymer reactant feed 210 can exit adsorption unit 204 and enter reactor 102. Treated reactant feed 210 can be the same or similar in composition as treated reactant feed 110. In reactor 102, the hydrogenation of the treated waste reactant feed can be conducted as previously described to produce a polymer product that can include at least one hydrogenated, at least one partially hydrogenated aromatic ring, or both, or mixtures thereof. Polymer product 212 can exit reactor 102 and be sent to other processing units, stored, and/or be transported. In some embodiments, reactor 102 includes a filtration unit capable of filtering catalyst from the polymer product. In other embodiments, the polymer product 212 can be provided to a filtration unit to remove the catalyst from the polymer product.

Reactor 102 can include one or more heating and/or cooling devices (e.g., insulation, electrical heaters, jacketed heat exchangers) or controllers (e.g., computers, flow valves, automated values, *etc*.) that can be used to control the reaction temperature and pressure of the reaction mixture. While only one reactor is shown, it should be understood that multiple reactors can be housed in one unit, or a plurality of reactors housed in one reactor unit. In some embodiments, a series of physically separated reactors with interstage cooling/heating devices, including heat exchangers, furnaces, fired heaters, and the like can be used.

### B. Waste Aromatic-Containing Polymer Reactant Feed

The waste aromatic-containing polymer reactant feed can include waste aromatic-containing polymers. Waste aromatic-containing polymers can include polymers that have been previously used in an application or article of manufacture. Non-limiting examples of waste aromatic-containing polymers can include waste polystyrene, waste expanded polystyrene, waste densified expanded polystyrene, or a blend thereof. Waste expanded polystyrene can include 1 wt.% to 5 wt.%, preferably 2 wt.% polystyrene with the balance being air. Densified waste expanded polystyrene (EPS) can be waste expanded polystyrene with the air removed. Densification can be done through mechanical or thermal methods. Mechanical methods can include exerting sufficient pressure on waste EPS to break the walls of the cellular structure and squeeze out the entrapped air. Thermal densification can include heating the waste EPS to a temperature sufficient to liberate trapped air. Mechanical and thermal densifiers are commercially known.

The waste aromatic-containing polymer can include additives. Some of the additives can be detrimental to the hydrogenation reaction. Non-limiting examples of additives can include a co-stabilizer, an anionic surfactant, nucleating agent initiator, a suspension aid, a flame retardant, a colorant, a flow modifier, an UV absorber, an impact modifier, an antioxidant, or a mixture thereof.

Non-limiting examples of co-stabilizers include ammonium persulfate.

Non-limiting examples of anionic surfactants include ammonium lauryl sulfate, ammonium laureth sulfate, triethylamine lauryl sulfate, triethylamine laureth sulfate, triethanolamine lauryl sulfate, triethanolamine laureth sulfate, monoethanolamine lauryl sulfate, monoethanolamine laureth sulfate, diethanolamine lauryl sulfate, diethanolamine laureth sulfate, lauric monoglyceride sodium sulfate, sodium lauryl sulfate, sodium laureth sulfate, potassium lauryl sulfate, potassium laureth sulfate, sodium lauryl sarcosinate, sodium lauroyl sarcosinate, lauryl sarcosine, cocoyl sarcosine, ammonium cocoyl sulfate, ammonium lauroyl sulfate, sodium cocoyl sulfate, sodium lauroyl sulfate, potassium cocoyl sulfate, potassium lauryl sulfate, triethanolamine lauryl sulfate, triethanolamine lauryl sulfate, monoethanolamine cocoyl sulfate, monoethanolamine lauryl sulfate, sodium tridecyl benzene sulfonate, sodium dodecyl benzene sulfonate, sodium cocoyl isethionate, and combinations thereof.

Non-limiting examples of nucleating agents include synthetic waxes, such as fully saturated homopolymers of ethylene that have a high degree of linearity and crystallinity. Synthetic waxes can be referred to as polywax (e.g., polywax 100, polywax 500, polywax 1000, and the like).

Non-limiting examples of initiators include benzoyl peroxide or *tert-*butylperoxybenzoate, substituted or unsubstituted dibenzoyl peroxides, 1,1-di(tert-butylperoxy)-3,3,5-trimethylcyclohexane, 2,2-di(tert-butyl peroxy)butane, 1,1-di(tert-butylperoxy)cyclohexane, dicetylperoxydicarbonate, dimyristylperoxydicarbonate, 1,1,3,3-tetramethylbutyl peroxypivalate, tert-butyl peroxyneodecanoate, tert-amyl peroxypivalate, tert-butyl peroxypivalate, di(3,5,5-trimethylhexanoyl)peroxide, dilauroyl peroxide, didecanoyl peroxide, 2,2'-azobis(isobutyronitrile), 2,2'-azobis(2-methylbutyronitrile), 2,5-dimethyl-2,5-di(2-ethylhexanoylperoxy)hexane, 1,1,3,3-tetramethylbutyl peroxy-2-ethyl hexanoate, tert-amylperoxy-2-ethylhexanoate, tert-butylperoxy-2-ethylhexanoate, tert-butyl peroxydiethylacetate, tert-butylperoxyisobutyrate, and combinations of one or more of these initiators.

Non-limiting examples of suspension aids include tri-calcium phosphate, sodium docecylbenzene sulfonate, hydroxyapatite, magnesium phosphate, or combinations thereof.

Non-limiting examples of fire retardants include organohalogen compounds such as hexabromocyclododecane, brominated styrenic polymers such as styrene-butadiene copolymers, and derivatives of tetrabromobisphenol A tribromophenyl allylether. Common fire retardants can include tetrabromobisphenol A bis(2,3,-dibromo-2-methylpropyl ether) or hexabromocyclodecane.

Non-limiting examples of colorants include organic or inorganic pigment, dye, or mixtures, or combinations thereof. Non-limiting examples of an inorganic material pigment or dye include metal oxides, iron oxide or titanium dioxide, strontium chromate or barium sulfate, aluminum flakes or particles, carbon black, talc, and the like. Non-limiting examples of organic pigments or dyes are perylene, phthalocyanine derivatives (*e.g*., copper phthalocyanine), indanthrone, benzimidazolone, quinacridone, perinone, azomethine derivatives, fluorescent organic compounds, or a mixture thereof.

Non-limiting examples of antioxidants include sterically hindered phenolic compounds, aromatic amines, a phosphite compound, carbon black, and the like. Non-limiting examples of phenolic antioxidants include 2,6-di-*tert-*butyl-4-methylphenol (CAS No. 128-37-0), pentaerythritol-tetrakis(3-(3,5-di-*tert*-butyl-4-hydroxyphenyl)propionate (CAS No. 6683-19-8), octadecyl 3-(3',5'-di-*tert*-butyl-4-hydroxyphenyl)propionate (CAS No. 2082-79-3), 1,3,5-trimethyl-2,4,6-tris-(3,5-di-*tert*-butyl-4-hydroxybenzyl)benzene (CAS No. 1709-70-2), 2,2'-thiodiethylenebis(3,5-di-*tert*-butyl-4-hydroxyphenyl)propionate (CAS No. 41484-35-9), calcium bis(ethyl 3,5-di-*tert*-butyl-4-hydroxybenzylphosphonate) (CAS No. 65140-91-2), 1,3,5-tris(3',5'-di-*tert*-butyl-4'-hydroxybenzyl)-isocyanurate (CAS No. 27676-62-6), 1,3,5-tris(4-*tert*-butyl-3-hydroxy-2,6-dimethylbenzyl)-1,3,5-triazine-2,4,6-(1H,3H,5H)-trione (CAS No. 40601-76-1), 3,3-bis(3-*tert*-butyl-4-hydroxyphenyl)ethylene butyrate (CAS No. 32509-66-3), 4,4'-thiobis(2-*tert-*butyl-5-methylphenol) (CAS No. 96-69-5), 2,2'-methylene-bis-(6-(1-methyl-cyclohexyl)-paracresol) (CAS No. 77-62-3), 3,3'-bis(3,5-di-*tert*-butyl-4-hydroxyphenyl)-N,N'-hexamethylenedipropionamide (CAS No. 23128-74-7), 2,5,7,8-tetramethyl-2-(4',8',12'-trimethyltridecyl)-chroman-6-ol (CAS No. 10191-41-0), 2,2-ethylidenebis(4,6-di-*tert-*butylphenol) (CAS No. 35958-30-6), 1,1,3-tris(2-methyl-4-hydroxy-5'-*tert*-butylphenyl)butane (CAS No. 1843-03-4), 3,9-bis(1,1-dimethyl-2-(beta-(3-*tert*-butyl-4-hydroxy-5-methylphenyl)propionyloxy)ethyl)-2,4,8,10-tetraoxaspiro[5.5]undecane (CAS No. 90498-90-1;), 1,6-hexanediyl-bis(3,5-bis(1,1-dimethylethyl)-4-hydroxybenzene)propanoate) (CAS No. 35074-77-2), 2,6-di-*tert*-butyl-4-nonylphenol (CAS No. 4306-88-1), 4,4'-butylidenebis(6-*tert*-butyl-3-methylphenol (CAS No. 85-60-9); 2,2'-methylene bis(6-*tert*-butyl-4-methylphenol) (CAS No. 119-47-1), triethylenglycol-bis-(3-*tert*-butyl-4-hydroxy-5-methylphenyl)propionate (CAS No. 36443-68-2), a mixture of C₁₃ to C₁₅ linear and branched alkyl esters of 3-(3',5'-di-*tert*-butyl-4'-hydroxyphenyl)propionic acid (CAS No. 171090-93-0), 2,2'-thiobis(6-*tert*-butyl-*para*-cresol) (CAS No. 90-66-4), diethyl-(3,5-di-tert-butyl-4-hydroxybenzyl)phosphate (CAS No. 976-56-7), 4,6-bis (octylthiomethyl)-*ortho*-cresol (CAS No. 110553-27-0), benzenepropanoic acid, octyl 3-(3,5-di-tert-butyl-4-hydroxyphenyl)propanoate (CAS No. 125643-61-0), 1,1,3-tris[2-methyl-4-[3-(3,5-di-tert-butyl-4-hydroxyphenyl)propionyloxy]-5-*tert*-butylphenyl]butane (CAS No. 180002-86-2), mixed styrenated phenols (CAS No. 61788-44-1), butylated, octylated phenols (CAS No. 68610-06-0), butylated reaction product of p-cresol and dicyclopentadiene (CAS No. 68610-51-5).

Non-limiting examples of phosphite antioxidant include one of tris(2,4-di-*tert-*butylphenyl)phosphite (CAS No. 31570-04-4), tris(2,4-di-*tert-*butylphenyl)phosphate (CAS No. 95906-11-9), bis(2,4-di-*tert*-butylphenyl)pentaerythritol diphosphite (CAS No. 26741-53-7); and tetrakis (2,4-di-butylphenyl)-4,4'-biphenylene diphosphonite (CAS No. 119345-01-6), and bis (2,4-dicumylphenyl)pentaerythritol diphosphite (CAS No. 154862-43-8).

Non-limiting examples of UV stabilizers include hindered amine light stabilizers, hydroxybenzophenones, hydroxyphenyl benzotriazoles, cyanoacrylates, oxanilides, hydroxyphenyl triazines, and combinations thereof. Non-limiting examples of hindered amine light stabilizers include dimethyl succinate polymer with 4-hydroxy-2,2,6,6-tetramethyl-l-piperidine ethanol (CAS No. 65447-77-0); poly[[6-((l,l,3,3-tetramethylbutyl)amino)-1,3,5-triazine2,4diyl][(2,2,6,6-tetramethyl-4-piperidyl)imino]hexamethylene[2,2,6,6-tetramethyl-4-piperidyl)imino]] (CAS No. 70624-18-9); and 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS No. 106990-43-6).

Non-limiting examples of heat stabilizers include phenothiazine, p-methoxyphenol, cresol, benzhydrol, 2-methoxy-p-hydroquinone, 2,5-di-tert-butylquinone, diisopropylamine, and distearyl thiodipropionate (CAS No. 693-36-7).

### C. Adsorbent

The adsorbent can be activated carbon, silica gel, a molecular sieve, or a combination thereof. In a preferred aspect, the adsorbent can be activated carbon. In general, the ratio of adsorbent to waste aromatic-containing polymer can be 1:2 to 1:20 or 1:2, 1:3, 1:4, 1:5, 1:6, 1:7, 1:8, 1:9, 1:10, 1:11, 1:12, 1:13, 1:14, 1:15, 1:16, 1:17, 1:18, 1:19, 1:20 or any range or value there between. In some aspects, the ratio of adsorbent to waste aromatic-containing polymer can be 1:2 to 1:6, preferably 1:4.

### D. Solvent

The solvent can include a polar solvent and/or a non-polar solvent. Non-limiting examples of polar solvents include dichloromethane, 1,2-dichloroethane, tetrahydrofuran, methyl tetrahydrofuran, or a blend thereof. Nonpolar solvents can include C5 to C12 linear alkane, a C5 to C12 branched alkane, or a C5 to C12 cyclic alkane, or a blend thereof. Non-limiting examples of nonpolar solvents can include, cyclopentane, cyclohexane, methylcyclohexane, ethylcyclohexane, cyclooctane, cycloheptane, dodecane, isopentane, decahydronaphthalene, or a mixture thereof. A volume ratio of nonpolar solvent to polar solvent can be 0.1:99.9 to 99.9:0.1. Non-limiting examples of volume ratios can include 1:1, 1.2:1, 1.3:1, 1.4:1, 1.5:1, 1.6:1, 1.7:1, 1.8:1, 1.9:1, 2.0:1, 2.5:1, 3:1, 3.5:1, 4:1, 4.5:1, 5:1, 5.5:1, 6:1, 6.5:1, 7:1, 7.5:1, 8:1, 8.5:1, 9:1, 9.5:1, 10:1, 15:1, 20:1, or any value or range there between. The solvent can include any mixture of the non-polar and polar solvents as long as the volume ratio of non-polar to polar solvent is maintained. Non-limiting examples of the solvent can include a mixture of dichloromethane and cyclopentane, a mixture of dichloromethane and cyclohexane, a mixture of dichloromethane and methylcyclohexane, a mixture of dichloromethane and ethylcyclohexane, a mixture of dichloromethane and cyclooctane, a mixture of dichloromethane and cycloheptane, a mixture of dichloromethane and dodecane, a mixture of dichloromethane and isopentane, or a mixture of dichloromethane and decahydronaphthalene. In another example, the solvent system can include a mixture of 1,2-dichloroethane and cyclopentane, a mixture of 1,2-dichloroethane and cyclohexane, a mixture of 1,2-dichloroethane and methylcyclohexane, a mixture of 1,2-dichloroethane and ethylcyclohexane, a mixture of 1,2-dichloroethane and cyclooctane, a mixture of 1,2-dichloroethane and cycloheptane, a mixture of 1,2-dichloroethane and dodecane, a mixture of 1,2-dichloroethane and isopentane, or a mixture of 1,2-dichloroethane and decahydronaphthalene. In another example, the solvent system can include a mixture of tetrahydrofuran (THF) and cyclopentane, a mixture of THF and cyclohexane, a mixture of THF and methylcyclohexane, a mixture of THF and ethylcyclohexane, a mixture of THF and cyclooctane, a mixture of THF and cycloheptane, a mixture of THF and dodecane, a mixture of THF and isopentane, or a mixture of THF and decahydronaphthalene. In yet another example, the solvent system can include a mixture of methyl tetrahydrofuran (MTHF) and cyclopentane, a mixture of MTHF and cyclohexane, a mixture of MTHF and methylcyclohexane, a mixture of MTHF and ethylcyclohexane, a mixture of MTHF and cyclooctane, a mixture of MTHF and cycloheptane, a mixture of MTHF and dodecane, a mixture of MTHF and isopentane, or a mixture of MTHF and decahydronaphthalene. Other solvent combinations (e.g., 3, 4, 5 6, 7, 8, 9, 10, 15, 20 solvent combinations and the like) are also within the scope of this invention. Using the adsorbent and solvent of the present invention, the hydrogenation rate of reaction can be increased by a factor of 1, 2, 2.5, 3, 3.5, 4, 4.5, 5, or greater as compared to a hydrogenation rate of reaction of the same reaction using untreated waste aromatic-containing polymer and a nonpolar solvent. The solvent system of the present invention can fully solubilize, or at least partially solubilize the waste aromatic-containing polymer, the hydrogenated aromatic-containing polymer, the partially hydrogenated aromatic-containing polymer, or combinations thereof. In general, a waste polymer concentration in the solvent system of the present invention can be 5 wt.% to 20 wt.%, or 5 wt.%, 6 wt.%, 7 wt.%, 8 wt.%, 9 wt.%, 10 wt.%, 11 wt.%, 12 wt.%, 13 wt.%, 14 wt.%, 15 wt.%, 16 wt.%, 17 wt.%, 18 wt.%, 19 wt.%, 20 wt.% or any range or value there between. The waste polymer concentration can be the same or different for the adsorbent step and the hydrogenation step.

### E. Catalysts

Catalysts of the present invention can include commercial catalysts capable of catalyzing hydrogenation of an aromatic-containing polymer. Non-limiting examples of catalysts include Sigma-Aldrich^{®} (USA), Unicat (USA), BASF (Germany), Johnson Matthey (Great Britain), Evonik (Germany), Clariant (Switzerland), and the like. The catalyst include one or more catalytic metals. In some aspects, the catalyst includes platinum (Pt), palladium (Pd), ruthenium (Ru), rhodium (Rd), or any combination thereof. In some embodiments, the catalyst is a bimetallic or trimetallic catalyst. A bimetallic catalyst can include Pt, Pd, Ru, and/or Rd, in combination with nickel (Ni), iridium (Ir), iron (Fe), copper (Cu), and/or silver (Ag) metals or a combination thereof. The catalyst can be supported or unsupported. Non-limiting examples of supports include silica (SiO₂), alumina (Al₂O₃), or titania (TiO₂), or any combination thereof. In some aspects, the catalyst is a Pt/Al₂O₃, Pt/SiO₂, or Pt/Al₂O₃ catalyst. A total weight percentage of metal in a supported catalyst can range from 40 wt.% to 50 wt.%, or 41 wt.%, 42 wt.%, 43 wt.%, 44 wt.%, 45 wt.%, 46 wt.%, 47 wt.%, 48 wt.%, 49 wt.%, or 50 wt.%.

In one embodiment, the catalyst can include, based on the total weight of the catalyst, 0.05 wt.% to 0.9 wt.% of Pt nanoparticles and 99.1 wt.% to 99.95 wt.% of TiO₂, 0.20 wt.% to 0.60 wt.% of Pt nanoparticles and 99.4 wt.% to 99.8 wt.% of TiO₂, or 0.25 wt.% to 0.50 wt.% of Pt nanoparticles and 99.5 wt.% to 99.75 wt.% of TiO₂. Such a catalyst has a pore volume of 0.01 cm³/g to 0.35 cm³/g, preferably 0.03 cm³/g to 0.30 cm³/g, more preferably 0.05 cm³/g to 0.25 cm³/g, a surface area of 5 m²/g to 80 m²/g, preferably 5 m²/g to 40 m²/g, more preferably 5 m²/g to 20 m²/g, and/or a median pore diameter of less than 300 microns, preferably less than 100 microns.

In one embodiment, the catalyst can include, based on the total weight of the catalyst, 0.05 wt.% to 0.9 wt.% of Pt nanoparticles and 99.1 wt.% to 99.95 wt.% of SiO₂, 0.20 wt.% to 0.60 wt.% of Pt nanoparticles and 99.4 wt.% to 99.8 wt.% of SiO₂, or 0.25 wt.% to 0.50 wt.% of Pt nanoparticles and 99.5 wt.% to 99.75 wt.% of SiO₂. Such a catalyst can have a pore volume of 0.01 cm³/g to 0.35 cm³/g, preferably 0.03 cm³/g to 0.30 cm³/g, more preferably 0.05 cm³/g to 0.25 cm³/g, a surface area of 5 m²/g to 80²/g, preferably 5 m²/g to 40 m²/g, more preferably 5 m²/g to 20 m²/g, and/or a median pore diameter of less than 300 microns, preferably less than 100 microns.

In one embodiment, the catalyst can include, based on the total weight of the catalyst, 0.05 wt.% to 0.9 wt.% of Pt nanoparticles and 99.1 wt.% to 99.95 wt.% of Al₂O₃, 0.20 wt.% to 0.60 wt.% of Pt nanoparticles and 99.4 wt.% to 99.8 wt.% of Al₂O₃, or 0.25 wt.% to 0.50 wt.% of Pt nanoparticles and 99.5 wt.% to 99.75 wt.% of Al₂O₃. Such a catalyst has a pore volume of 0.01 cm³/g to 0.35 cm³/g, preferably 0.03 cm³/g to 0.30 cm³/g, more preferably 0.05 cm³/g to 0.25 cm³/g, a surface area of 5 m²/g to 80 m²/g, preferably 5 m²/g to 40 m²/g, more preferably 5 m²/g to 20 m²/g, and/or a median pore diameter of less than 300 microns, preferably less than 100 microns.

### EXAMPLES

The present invention will be described in greater detail by way of specific examples. The following examples are offered for illustrative purposes only and are not intended to limit the invention in any manner.

### Example 1

### (Treatment of a polymer solution containing a waste aromatic-containing polymer)

Densified expanded polystyrene beads (2 g, Big Joe^{®}, Grand Rapids, MI) were dissolved in a 1:1 mixture of dichloromethane and cyclohexane (31.63 g) to produce a polymer solution (6 wt.%). Activated carbon (0.5 g) was added to the solution, stirred overnight, and filtered through celite to produce a treated polymer solution.

### Example 2

### (Hydrogenation of treated polymer solution)

A Pt/Al₂O₃ catalyst prepared according to International Publication No. WO 2022/013751 to Wu et al.*,*(0.45 wt.% Pt, 0.2 g) was placed in a stainless reactor (Parr Series 5000 Multiple Reactor System, Parr Instrument Company, 100 mL) together with the treated polymer solution (30 mL total). The reactor was purged first with N₂ for five times, and then with H₂ five times to remove air and moisture and the charged with high-pressure H₂ to 1000 psi (6.9 MPa). After the desired pressure has been reached the reactor content was heated to a set temperature of 120 °C, at a rate of 3 °C /min, and maintain at the final set temperature for hours. After the reaction finished, the reactor was cooled to room temperature, the pressure discharged to atmospheric pressure (101 kPa), the contents in the reactor recovered, and the solid catalysts was separated from the polymer solution using centrifugation or filtration. Twenty-five percent conversion was observed after 0.64 hours, fifty percent conversion was observed after 0.76 hours, seventy-five percent conversion was observed after 0.9 hours, and maximum conversion (100%) was reached in 1.16 hours.

### Example 3

### (Comparative Example--Hydrogenation of untreated EPS beads)

The procedure of Example 1 was followed with the exception that the temperature was increased to 140 °C and cyclohexane was used as the solvent (*i.e.,* no polar solvent was used). The conversion only reached 20% after 10.75 hours, with a maximum conversion of 35%.

As shown in the Examples, the method of the present invention provides methodology to allow maximum conversion of a waste aromatic-containing polymer to a useful polymer product that includes poly(vinylcyclohexane).

## Claims

1. A method for the hydrogenation of a waste aromatic-containing polymer, the method comprising:
(a) contacting a waste aromatic-containing polymer solution comprising a waste aromatic-containing polymer, one or more additives, and a solvent with an adsorbent material to produce a treated waste aromatic-containing polymer solution;
(b) removing the adsorbent from the produced treated waste aromatic-containing polymer solution; and
(c) contacting the treated waste aromatic-containing polymer solution with a hydrogenation catalyst in the presence of hydrogen (H₂) gas under conditions sufficient to produce a polymer composition comprising at least one hydrogenated and/or at least one partially hydrogenated aromatic ring,
wherein at least one additive is removed from the treated waste aromatic-containing polymer solution, wherein the one or more additives comprise a co-stabilizer, an anionic surfactant, nucleating agent, initiator, a flame retardant, a colorant, or a mixture thereof.

2. The method of claim 1, wherein the waste aromatic-containing polymer comprises waste polystyrene, waste expanded polystyrene, waste densified expanded polystyrene, or a blend thereof, and the hydrogenated or partially hydrogenated polymer comprises poly(vinylcyclohexane).

3. The method of any one of claims 1 to 2, wherein the adsorbent is activated carbon, silica gel, a molecular sieve, or a combination thereof, preferably activated carbon.

4. The method of any one of claims 1 to 3, wherein the solvent comprises a polar solvent, a non-polar solvent, or a mixture thereof.

5. The method of claim 4, wherein the non-polar solvent is a C5 to C12 linear, branched, or cyclic alkane, or a mixture thereof.

6. The method of any one of claims 4 to 5, wherein the solvent is cyclohexane, methylcyclohexane, ethylcyclohexane, cyclooctane, cycloheptane, dodecane, isopentane, cyclopentane, decahydronaphthalene, or a mixture thereof.

7. The method of any one of claims 4 to 6, wherein the polar solvent is dichloromethane, 1,2-dichloroethane, tetrahydrofuran, methyl tetrahydrofuran, or a mixture thereof.

8. The method of any one of claims 4 to 7, wherein the non-polar solvent is cyclohexane, and the polar solvent is dichloromethane.

9. The method of any one of claims 4 to 8, wherein a volume ratio of nonpolar solvent to polar solvent is 0.1:99.9 to 99.9:0.1, preferably 1:1.

10. The method any one of claims 1 to 9, wherein step (a) contacting conditions comprise a temperature of 20 °C to 30 °C, atmospheric pressure, or a combination thereof, for 8 to 30 hours, preferably, 10 hours.

11. The method any one of claims 1 to 10, wherein step (c) contacting conditions comprise a temperature of 100 °C to 220 °C, a pressure of 3.4 MPa to 6.9 MPa, or a combination thereof.

12. The method of any one of claims 1 to 11, wherein the hydrogenation catalyst comprises platinum (Pt), palladium (Pd), ruthenium (Ru), or any combination thereof, or alloy thereof, on a support, wherein the support comprises silica (SiO₂), alumina (Al₂O₃), or titania (TiO₂), or any combination thereof.

13. The method of any one of claims 1 to 12, wherein the waste aromatic-containing polymer concentration in the polymer solution of step (a), step (b), or both is 5 wt.% to 20 wt.%, preferably 8 wt.%.

## Patentansprüche

1. Verfahren zur Hydrierung eines aromatenhaltigen Polymerabfalls, wobei das Verfahren umfasst:
(a) In-Kontakt-Bringen einer aromatenhaltigen Polymerabfalllösung, die einen aromatenhaltigen Polymerabfall, ein oder mehrere Zusatzstoffe und ein Lösungsmittel umfasst, mit einem Adsorptionsmittel zum Erzeugen einer behandelten aromatenhaltigen Polymerabfalllösung;
b) Entfernen des Adsorptionsmittels aus der erzeugten behandelten, aromatenhaltigen Polymerabfalllösung; und
(c) In-Kontakt-Bringen der behandelten, aromatenhaltigen Polymerabfalllösung mit einem Hydrierungskatalysator in Gegenwart von Wasserstoffgas (H₂-Gas) unter Bedingungen, die ausreichen, um eine Polymerzusammensetzung zu erzeugen, die mindestens einen hydrierten und/oder mindestens einen teilweise hydrierten aromatischen Ring umfasst,
wobei mindestens ein Zusatzstoff aus der behandelten, aromatenhaltigen Polymerabfalllösung entfernt wird, wobei der eine oder die mehreren Zusatzstoffe einen Co-Stabilisator, ein anionisches Tensid, ein Nukleierungsmittel, einen Initiator, ein Flammschutzmittel, ein Farbmittel oder ein Gemisch davon umfassen.

2. Verfahren nach Anspruch 1, wobei der aromatenhaltige Polymerabfall Polystyrolabfall, expandierten Polystyrolabfall, verdichteten expandierten Polystyrolabfall oder eine Mischung davon umfasst und das hydrierte oder teilweise hydrierte Polymer Poly(vinylcyclohexan) umfasst.

3. Verfahren nach einem der Ansprüche 1 bis 2, wobei das Adsorptionsmittel Aktivkohle, Kieselgel, ein Molekularsieb oder eine Kombination davon, vorzugsweise Aktivkohle ist.

4. Verfahren nach einem der Ansprüche 1 bis 3, wobei das Lösungsmittel ein polares Lösungsmittel, ein unpolares Lösungsmittel oder ein Gemisch davon umfasst.

5. Verfahren nach Anspruch 4, wobei das unpolare Lösungsmittel ein lineares, verzweigtes oder cyclisches C5- bis C12-Alkan oder ein Gemisch davon ist.

6. Verfahren nach einem der Ansprüche 4 bis 5, wobei das Lösungsmittel Cyclohexan, Methylcyclohexan, Ethylcyclohexan, Cyclooctan, Cycloheptan, Dodecan, Isopentan, Cyclopentan, Decahydronaphthalin oder ein Gemisch davon ist.

7. Verfahren nach einem der Ansprüche 4 bis 6, wobei das polare Lösungsmittel Dichlormethan, 1,2-Dichlorethan, Tetrahydrofuran, Methyltetrahydrofuran oder ein Gemisch davon ist.

8. Verfahren nach einem der Ansprüche 4 bis 7, wobei das unpolare Lösungsmittel Cyclohexan ist und das polare Lösungsmittel Dichlormethan ist.

9. Verfahren nach einem der Ansprüche 4 bis 8, wobei ein Volumenverhältnis von unpolarem zu polarem Lösungsmittel 0,1:99,9 bis 99,9:0,1, vorzugsweise 1:1 beträgt.

10. Verfahren nach einem der Ansprüche 1 bis 9, wobei Kontaktbedingungen in Schritt (a) eine Temperatur von 20 °C bis 30 °C, Atmosphärendruck oder eine Kombination davon für 8 bis 30 Stunden, vorzugsweise 10 Stunden, umfassen.

11. Verfahren nach einem der Ansprüche 1 bis 10, wobei Kontaktbedingungen in Schritt (c) eine Temperatur von 100 °C bis 220 °C, einen Druck von 3,4 MPa bis 6,9 MPa oder eine Kombination davon umfassen.

12. Verfahren nach einem der Ansprüche 1 bis 11, wobei der Hydrierungskatalysator Platin (Pt), Palladium (Pd), Ruthenium (Ru) oder eine beliebige Kombination davon oder eine Legierung davon auf einem Träger umfasst, wobei der Träger Siliciumdioxid (SiO₂), Aluminiumoxid (Al₂O₃) oder Titandioxid (TiO₂) oder eine beliebige Kombination davon umfasst.

13. Verfahren nach einem der Ansprüche 1 bis 12, wobei die Konzentration des aromatenhaltigen Polymerabfalls in der Polymerlösung von Schritt (a), Schritt (b) oder beiden 5 Gew.-% bis 20 Gew.-%, vorzugsweise 8 Gew.-% beträgt.

## Revendications

1. Procédé pour l'hydrogénation d'un polymère résiduaire contenant des aromatiques, le procédé comprenant :
(a) la mise en contact d'une solution polymère résiduaire contenant des aromatiques comprenant un polymère résiduaire contenant des aromatiques, un ou plusieurs additifs et un solvant avec un matériau adsorbant pour produire une solution polymère résiduaire contenant des aromatiques traitée ;
b) l'élimination de l'adsorbant de la solution polymère résiduaire contenant des aromatiques traitée produite ; et
(c) la mise en contact de la solution polymère résiduaire contenant des aromatiques traitée avec un catalyseur d'hydrogénation en présence d'hydrogène gazeux (H₂) dans des conditions suffisantes pour produire une composition polymère comprenant au moins un cycle aromatique hydrogéné et/ou au moins partiellement hydrogéné,
dans lequel au moins un additif est éliminé de la solution polymère résiduaire contenant des aromatiques traitée, dans lequel les un ou plusieurs additifs comprennent un co-stabilisant, un tensioactif anionique, un agent de nucléation, un initiateur, un retardateur de flamme, un colorant ou un mélange de ceux-ci.

2. Procédé selon la revendication 1, dans lequel le polymère résiduaire contenant des aromatiques comprend du polystyrène résiduaire, du polystyrène expansé résiduaire, du polystyrène expansé densifié résiduaire ou un mélange de ceux-ci, et le polymère hydrogéné ou partiellement hydrogéné comprend du poly(vinylcyclohexane).

3. Procédé selon l'une quelconque des revendications 1 à 2, dans lequel l'adsorbant est du charbon actif, du gel de silice, un tamis moléculaire ou une combinaison de ceux-ci, de préférence du charbon actif.

4. Procédé selon l'une quelconque des revendications 1 à 3, dans lequel le solvant comprend un solvant polaire, un solvant non polaire ou un mélange de ceux-ci.

5. Procédé selon la revendication 4, dans lequel le solvant non polaire est un alcane linéaire, ramifié ou cyclique en C5 à C12, ou un mélange de ceux-ci.

6. Procédé selon l'une quelconque des revendications 4 à 5, dans lequel le solvant est le cyclohexane, le méthylcyclohexane, l'éthylcyclohexane, le cyclooctane, le cycloheptane, le dodécane, l'isopentane, le cyclopentane, le décahydronaphtalène ou un mélange de ceux-ci.

7. Procédé selon l'une quelconque des revendications 4 à 6, dans lequel le solvant polaire est le dichlorométhane, le 1,2-dichloroéthane, le tétrahydrofurane, le méthyltétrahydrofurane ou un mélange de ceux-ci.

8. Procédé selon l'une quelconque des revendications 4 à 7, dans lequel le solvant non polaire est le cyclohexane et le solvant polaire est le dichlorométhane.

9. Procédé selon l'une quelconque des revendications 4 à 8, dans lequel un rapport volumique de solvant non polaire au solvant polaire est de 0,1:99,9 à 99,9:0,1, de préférence 1:1.

10. Procédé selon l'une quelconque des revendications 1 à 9, dans lequel les conditions de mise en contact de l'étape (a) comprennent une température de 20 °C à 30 °C, une pression atmosphérique ou une combinaison de celles-ci, pendant 8 à 30 heures, de préférence 10 heures.

11. Procédé selon l'une quelconque des revendications 1 à 10, dans lequel les conditions de mise en contact de l'étape (c) comprennent une température de 100 °C à 220 °C, une pression de 3,4 MPa à 6,9 MPa, ou une combinaison de celles-ci.

12. Procédé selon l'une quelconque des revendications 1 à 11, dans lequel le catalyseur d'hydrogénation comprend du platine (Pt), du palladium (Pd), du ruthénium (Ru), ou une quelconque combinaison de ceux-ci, ou un alliage de ceux-ci, sur un support, dans lequel le support comprend de la silice (SiO₂), de l'alumine (Al₂O₃), ou du dioxyde de titane (TiO₂), ou une quelconque combinaison de ceux-ci.

13. Procédé selon l'une quelconque des revendications 1 à 12, dans lequel la concentration en polymère résiduaire contenant des aromatiques dans la solution polymère de l'étape (a), de l'étape (b) ou des deux est de 5 % en poids à 20 % en poids, de préférence 8 % en poids.
